# EUROPÄISCHE PATENTSCHRIFT

(11) **EP 1 300 037 B1**
(45) Veröffentlichungstag und Bekanntmachung des Hinweises auf die Patenterteilung: **07.03.2007**
(21) Anmeldenummer: 01938189.6
(22) Anmeldetag: 07.05.2001
(51) Int. Cl.: H04Q 7/32

(54) **MOBILTELEFON**
MOBILE TELEPHONE
TELEPHONE MOBILE

(30) Priorität: 12.05.2000 DE 10023407
(43) Veröffentlichungstag der Anmeldung: 09.04.2003
(73) Patentinhaber: Thuns, Anthony-C., 22111 Hamburg (DE); Radke, Wolfgang, 22143 Hamburg (DE); Hoormann, Werner, 22393 Hamburg (DE)
(72) Erfinder: THUNS, Anthony-C., 22111 Hamburg (DE)
(86) Internationale Anmeldenummer: PCT/EP2001/005152
(87) Internationale Veröffentlichungsnummer: WO 2001/086984

(56) Entgegenhaltungen:
- EP-A- 0 750 438
- WO-A-99/54753
- FR-A- 2 700 655
- US-A- 5 842 124

## Beschreibung

Die Erfindung betrifft ein Mobiltelefon mit einer Speichereinrichtung für zugeordnete Authentifizierungsdaten.

Bekannte Mobiltelefone werden zur Speicherung von Kommunikationsdaten, wie der Kennung und der Frequenz des Netzanbieters sowie von Authentifizierungsdaten mit einem von diesem zur Verfügung gestellten Speicher, einer sogenannten SIM-Karte, bestückt. Zu diesen Daten gehört auch die dem Gerät zugeordnete Telefonnummer. Unter der zugeordneten Telefonnummer wird hier diejenige verstanden, unter der das Gerät von Dritten anwählbar ist. Diese SIM-Karten sind austauschbar. Da sie die Kommunikations- sowie Authentifizierungsdaten enthalten, sind sie es, die einem Mobiltelefon eine Identität im Mobilfunknetz geben. Wird eine SIM-Karte ausgetauscht, so wechselt das Mobiltelefon zugleich seine Identität hinsichtlich des SIM-Karten-Benutzers. Bislang erhältliche Geräte und Speicherkarten sind so ausgebildet, daß sie nur über einen Netzanbieter, nämlich den Herausgeber der SIM-Karte, betrieben werden können. Daraus ergeben sich Nachteile. Zum einen kann ein Mobiltelefon zu jedem beliebigen Zeitpunkt nur eine Identität von dem die SIM-Karte herausgebenden Netzbetreiber haben, kann also nicht über einen anderen Netzbetreiber erreicht werden. zum anderen erhöht sich das Diebstahlrisiko, da es für einen Dieb ein leichtes ist, einem gestohlenen Mobiltelefon durch Austauschen der SIM-Karte eine neue Benutzer-Identität zu geben. Zwar ist als eine Möglichkeit zur Beschränkung des Wechsels von SIM-Karten ein sogenanntes SIMLOCK-Verfahren bekannt geworden. Darunter wird verstanden, dass ein Mobiltelefon zum Betrieb in nur einem Netz oder sogar mit nur einer Karte beschränkt ist. Dazu sind die Mobiltelefone derart ausgebildet, dass sie beim Einschalten prüfen, ob die vorgesehene SIM-Karte im Gerät steckt, und ob sie gegen eine andere SIM-Karte ausgetauscht wurde. Diese Prüfung nimmt das Mobiltelefon autark vor. Ein Kontakt mit dem Netzbetreiber ist nicht vorgesehen. Dieses Verfahren beschränkt die freie Verwendbarkeit des Mobiltelefons, ohne einen echten Diebstahlschutz zu gewährleisten. Ein ähnliches Verfahren ist in der EP-A-0 750 438 beschrieben.

Ferner ist es bekannt, ein Mobiltelefon mit einem integrierten Speicher zu versehen, in dem mehrere Sätze von Authentifizierungsdaten enthalten sind (FR-A-2700655). Diese Authentifizierungsdaten werden ausgelesen und zur Anmeldung an einem Mobilfunknetz verwendet. Inwieweit diese Identifizierungsdaten zum Diebstahlschutz verwendet werden können, ist in diesem Dokument nicht offenbart. Insbesondere ist nichts dazu beschrieben, dass die Authentifizierungsdaten manipulationssicher gegenüber dem Benutzer sind. Ein wirksamer Diebstahlschutz ist in diesem Dokument daher nicht offenbart.

Aus einer älteren Generation von Mobiltelefonen ist es weiter bekannt, im Speicherbereich des Mobiltelefons nur einen Satz von Authentifizierungsdaten zu speichern (US-A-5 842 124). Ein SIM-Kartenleser ist nicht vorgesehen. Damit eignet sich das Mobiltelefon konstruktionsbedingt nur für den Betrieb in einem Netz. Ein Betrieb in mehreren Netzen mit mehreren Sätzen von Authentifizierungsdaten ist nicht offenbart.

Ausgehend von der FR-A-2700655 als nächstliegender Stand der Technik liegt der Erfindung die Aufgabe zugrunde, ein Mobiltelefon mit einem hohen Diebstahlschutz zu schaffen unter Beibehaltung der Vorzüge einer hohen Flexibilität bezüglich des verwendbaren Mobilfunknetzes.

Die erfindungsgemäße Lösung liegt in einem Mobiltelefon gemäß Anspruch 1 und in einem Verfahren mit den Merkmalen des Anspruchs 9. Vorteilhafte Weiterbildungen sind Gegenstand der abhängigen Ansprüche.

Danach ist bei einem Mobiltelefon mit einem Speicher für zugeordnete Identifikations- und Authentifizierungsdaten, der festintegriert und in mehrere Speicherbereiche partitioniert ist, in die jeweils ein Satz der zwingend erforderlichen Identifikations-/Authentifizierungsdaten programmierbar ist, und mit einer Abfrageeinheit, die mit dem Speicher derart verbunden ist, um benötigte Sätze der Identifikations-/Authentifizierungsdaten zur Anmeldung in einem zugehörigen Mobilfunknetz auszulesen, wobei in dem Speicher zwingend eine einmalig zu dem Gerät gehörende Geräte-ID gespeichert ist, gemäß der Erfindung vorgesehen, dass als Speichererweiterung für den integrierten Speicher ein Aufnahmeschacht für SIM-Karten vorgesehen ist, und dass die Abfrageeinheit mit einer in dem Aufnahmeschacht eingesetzten SIM-Karte derart verbunden ist, um Identifikations- und Authentifizierungsdaten zur Anmeldung auszulesen, und die Abfrageeinrichtung ferner dazu ausgebildet ist, die Geräte-ID als einen zwingenden Teil der Authentifizierungsdaten und als weiteren Teil vom Netzbetreiber vergebene Kennnummern aus dem Speicher auszulesen und damit einen Anmeldevorgang bei dem zugehörigen Mobilfunknetz durchzuführen.

Erfindungsgemäß ist bei einem Mobiltelefon gemäß Anspruch 1 sowie einem Verfahren zum Anmelden eines Mobiltelefons an einem Mobilfunknetz gemäß Anspruch 9 folgendes vorgesehen: Einprogrammieren einer vom Hersteller vergebenen Gerätenummer sowie mehrerer von dem Netzbetreiber zugewiesener Kennnummern in den fest integrierten Speicher des Mobiltelefons, Generieren einer Schlüsselnummer aus der Gerätenummer sowie einer der Kennnummern mittels eines Kodierverfahrens, Eingeben einer Geheimnummer in das Mobiltelefon, Übertragen dieser Nummern in das Mobilfunknetz und Durchführen eines Authentifizierungsverfahrens mit der Schlüsselnummer und der Geheimnummer.

Unter einem fest integrierten Speicher wird ein Speicher verstanden, der für den Benutzer nicht auswechselbar oder reprogrammierbar ist. Lediglich der Mobilfunknetzbetreiber sowie von ihm autorisierte Fachbetriebe können den Speicher auswechseln oder reprogrammieren.

Unter Authentifizierungsdaten werden insbesondere vom Hersteller vergebene Identifikationsnummern (Geräte-ID), von dem jeweiligen Netzbetreiber zugewiesene zusätzliche Kennummern (Zusatz-ID), eine vom Netzbetreiber vergebene persönliche Identifikationsnummern (PIN) oder weitere zusätzliche Identifikationsnummern verstanden. Die Geräte-ID ist vorzugsweise weltweit einmalig.

Dies hat vor allem den Vorteil, daß das Mobiltelefon mit seinem fest integrierten Speicher eine feste Identität hat. Damit wird der Diebstahlgefahr entgegengewirkt. Denn bei einem gestohlenen Mobiltelefon kann erfindungsgemäß nicht seine Identität durch einfachen Tausch der SIM-Karte geändert werden. Ein gestohlenes Gerät kann daher leicht identifiziert werden. Es ergibt sich so die Möglichkeit, durch Schaffung entsprechender Sperrlisten bei den Netzbetreibern national oder auch international eine Aktivierung und damit auch Benutzung des gestohlenen Mobiltelefons zu verhindern. Dadurch werden gestohlene Mobiltelefone praktisch wertlos. Zweckmäßigerweise geschieht das dadurch, daß die Identität gestohlener oder sonstwie nicht legal zu benutzender Mobiltelefone bekanntgegeben werden, so daß bereits bei Anmeldung des Mobiltelefons in einem Mobilfunknetz von dem jeweiligen Netzbetreiber festgestellt werden kann, ob ein gestohlenes Mobiltelefon neu aktiviert oder freigeschaltet werden soll. Damit kann auch die Spur eines abhanden gekommenen Mobiltelefons nahezu weltweit verfolgt werden. Dadurch vermindert sich nicht nur die Diebstahlgefahr, sondern es wird auch eine leichtere Versicherbarkeit des Diebstahlrisikos zu kundenfreundlichen Bedingungen ermöglicht. Das gilt für die ganze Liefer-Kette vom Hersteller bis zum Sales-Partner.

Zweckmäßigerweise ist der fest integrierte Speicher mit weiteren Authentifizierungsdaten programmierbar.

Der fest integrierte Speicher ist partitioniert in mehrere Speicherbereiche, in denen jeweils ein Satz von Authentifizierungsdaten programmierbar ist. Dadurch kann erreicht werden, daß ein Mobiltelefon unter verschiedenen zugeordneten Telefonnummern erreichbar ist, wobei die Telefonnummern zu verschiedenen Netzbetreibern gehören können. Dies hat den Vorteil, daß die unterschiedlichen Telefonnummern verschiedenen Lebensbereichen zugeordnet werden können, beispielsweise der geschäftlichen bzw. der privaten Sphäre. Jedoch besteht auch die Möglichkeit, dieselbe Telefonnummer für mehrere Netzbetreiber einzurichten. Darüber hinaus ermöglicht die Partitionierung des fest integrierten Speichers, daß verschiedene Netzanbieter ausgewählt werden können, ohne daß dazu jeweils ein Wechsel der SIM-Karte erforderlich ist. Die SIM-Karte kann nun vielmehr als zusätzliches Speichermedium für Zusatzanwendungen im Offline-Betrieb (persönliche Daten) und im Online-Betrieb (z. B. Börsenbarometer) dienen, beim dem größere Datenmengen gespeichert werden, die zu einem späteren Zeitpunkt abgerufen werden. Es genügt, den jeweils relevanten Satz Authentifizierungsdaten aus der erfindungsgemäß fest integrierten Speichereinrichtung auszulesen und damit einen Anmeldevorgang bei dem zugehörigen Mobilfunknetz durchzuführen. Das hat den Vorteil, daß die unterschiedliche regionale Deckung der verschiedenen Netze genutzt werden kann. Ist zufällig am Standort des Benutzers das von ihm bevorzugte Netz nicht erreichbar, kann er direkt auf ein anderes Netz ausweichen, ohne dazu umständlich SIM-Karten auswechseln zu müssen oder die Anmeldeprozedur wiederholen zu müssen. Entsprechend wird auch seine Erreichbarkeit von Dritten verbessert. Außerdem kann er die Auswahl nach den jeweils günstigsten Gebühren des Ortes oder Landes treffen. Gerätefunktionen sind teils herstellerbedingt in einem entsprechenden Speicher vorhanden, können auch bedingt durch den jeweiligen Provider/Carrier in den Speicher mit aufgenommen werden (durch das Herunterladen aus dem Netz).

Die fest integrierte Speichereinheit ist vorzugsweise bezüglich der Frequenzwahl programmierbar. Jedoch besteht auch die Möglichkeit, daß die verfügbaren oder häufig verwendeten Frequenzen in der integrierten Speichereinheit von vornherein fest vorgesehen sind und die Einheit lediglich bezüglich der Freigabe einzelner dieser Frequenzen programmierbar ist. Das gilt entsprechend auch für eine austauschbare Speichereinheit. Beispielsweise ist es denkbar, ein halbes Dutzend oder mehr Frequenzen in der festen und ggf. auch austauschbaren Speichereinheit vorzusehen, von denen jede aber erst dann zugänglich wird, wenn sie vom jeweiligen Netzbetreiber freigeschaltet wird.

Die zugeordneten Rufnummern können gleichfalls von vornherein vorgesehen oder auch erst mit der Freischaltung vergeben werden. Ferner besteht die Möglichkeit, mehrere Rufnummern separat von den Frequenzen zu speichern und von Fall zu Fall ohne feste Netzzuordnung auszuwählen. Dabei sind also eine oder mehrere Frequenzen jeweils mit mehr als einer dem Gerät zugeordneten Rufnummer betreibbar. Ferner ist die zugeordnete Rufnummer bzw, sind die zugeordneten Rufnummern jeweils vorzugsweise mit mehr als einer Frequenz verwendbar.

Die jeweilige Hardwareausführung ist für die Erfindung von untergeordneter Bedeutung. Der fest integrierte Speicher ist beispielsweise gemäß gegenwärtiger Technik als RAM, ROM, PROM, E-PROM ausgeführt. Zweckmäßigerweise ist ein äu-ßerer Programmieranschluß vorgesehen. Jedoch kann die Programmierung gegebenenfalls auch kontaktlos erfolgen; beispielsweise kann die Freischaltung per Satellit oder Fernwartung der Netzbetreiber erfolgen.

zweckmäßigerweise ist eine sequenzielle Abfrageeinheit für den fest integrierten Speicher vorgesehen. Sie ermöglicht es, automatisch und ohne weiteres Zutun des Benutzers die Authentifizierungsdaten zyklisch nacheinander abzufragen und so zu bewirken, daß das Mobiltelefon zur selben Zeit bei verschiedenen Netzbetreibern angemeldet ist und über diese erreicht werden kann. Hierbei kann die Abfrageeinheit so ausgebildet sein, daß entweder stets dieselbe Telefonnummer verwendet wird, so daß der Benutzer in den verschiedenen Netzen unter einer Telefonnummer erreichbar ist oder daß jeweils die zu den jeweiligen Authentifizierungsdaten gespeicherte Telefonnummer aus dem fest integrierten Speicher verwendet wird, damit der Benutzer über verschiedene Telefonnummern erreichbar ist.

Falls das Gerät mit mehreren Rufnummern über einen oder mehrere Netzbetreiber ausgerüstet ist, besteht die Möglichkeit, beide Anschlüsse beim sogenannten Makeln gleichzeitig zu verwenden. Ferner wird zweckmäßigerweise die Möglichkeit einer Konferenzschaltung vorgesehen. In diesem Zusammenhang kann ein besonderes Erfindungsmerkmal darin bestehen (das gegebenenfalls von den übrigen Merkmalen dieser Erfindung unabhängig ist), daß den Teilnehmern zur gesonderten Verabschiedung aus der Konferenzschaltung Einzeltasten (Tasten 1 bis 0) zugeordnet sind.

Die unter unterschiedlichen Rufnummern ankommenden Verbindungen sind zweckmäßigerweise durch unterschiedliche Ruftöne, Sicht- oder Rüttelsignale unterscheidbar. Ferner können den verschiedenen Frequenzen bzw. Netzanbietern unterschiedliche Signale zugeordnet sein.

Es versteht sich, daß die Wählbarkeit unterschiedlicher Netze nicht an nationale Grenzen gebunden sein sollte.

In einer Ausführungsform, die vorzugsweise mit den bereits jetzt verfügbaren Geräten nutzbar sein sollte, ist der fest integrierte Speicher erweiterbar ausgeführt. Beispielsweise könnte das Mobiltelefon über einen Erst-Provider bezogen werden, der eine erste entsprechende Frequenz und Rufnummer freischaltet. Der Nutzer dieses Geräts kann sich weiteren Providern oder Carriern anschließen, national wie auch international. Die zusätzlichen Rufnummern können auf dem fest integrierten Speicher prgrammiert und ebenfalls freigeschaltet werden. Ein Auswechseln der Karte bei mehreren Providern entfällt.

Der Speicher kann erweiterbar sein, beispielsweise in Gestalt der bekannten SIM-Karten. Das Gerät ist dann zur Aufnahme von einer oder mehrerer SIM-Karten eingerichtet, deren jede einem Netzbetreiber bzw. einer Frequenz zugeordnet ist. Jedoch ist es technisch ohne weiteres möglich, ohne daß dies wegen der Geläufigkeit derartiger Technologie hier im einzelnen dargelegt werden muß, mehrere Frequenzen in einer Speichereinheit unterzubringen.

In jedem Fall sollte dabei auch die Möglichkeit vorgesehen werden, eine und dieselbe Rufnummer auf allen Kommunikationsebenen (Festnetz, Mobilkommunikation und in Zukunft ggf. noch mehr) zu verwenden. Das erfindungsgemäße Mobiltelefon kann mit einem sog. schnurlosen Telefon, wie es für den heimischen Gebrauch bekannt sind, kombiniert sein. Das bietet sich insbesondere für schnurlose Telefone nach dem DECT-Standard an. Es besteht dann sozusagen eine Erweiterung des DECT-System, genauer gesagt des DECT-System Endgefäts, durch Anmeldemöglichneit bei einem provider/carrier) oder umgekehrt.

Zweckmäßigerweise ist das Mobiltelefon mit einer Navigationseinrichtung versehen, die eine mit dem fest integrierten Speicher verbundene Ausleseeinrichtung für die Authentifizierungsdaten aufweist. Auf diese weise läßt sich ein zuverlässiges Ortungssystem realisieren, das gegenüber einem Mobiltelefon mit austauschbarer SIM-Karte eine erheblich höhere Manipulationssicherheit aufweist.

Mit dem erfindungsgemäßen Verfahren wird eine höhere Sicherheit beim Aktivieren oder Freischalten eines Mobiltelefons in einem Mobilfunknetz erreicht. Es geschieht dadurch, daß jedes Mobiltelefon seitens des Herstellers mit einer das konkrete Mobiltelefon individualisierenden Gerätenummer versehen ist, die in den fest integrierten Speicher einprogrammiert ist. Zusätzlich wird von dem Betreiber des Mobilfunknetzes dem Mobiltelefon eine weitere, beliebige Kennummer zugewiesen, die ebenfalls in den fest integrierten Speicher programmiert wird. Mittels eines speziellen Kodierverfahrens werden aus der Gerätenummer sowie der Kennummer eine Zahlenkombination generiert, die als Schlüsselnummer dient. Bei der Schlüsselnummer kann es sich um einen Auszug oder um eine Erweiterung der vorstehend genannten Identifikationsnummern handeln. Unter Sicherheitsaspekten ist es von Vorteil, die gesamte von dem Hersteller vergebene Gerätenummer zu nutzen. Denn diese Nummer ist für das Gerät auf Lebenszeit relevant und außerhalb von ganz speziell dafür ausgesuchten Fachwerkstätten nicht austauschbar. Damit ist jedes Mobiltelefon weltweit einzigartig individualisiert. Die von dem Benutzer einzugebende Geheimzahl wird von dem Mobilfunknetzbetreiber zur Verfügung gestellt. Sie dient zum einen zur Identifikation eines Benutzers als den berechtigten Benutzer und zweckmäßigerweise zum anderen auch zur Festlegung derjenigen Dienstmerkmale des Mobilfunknetzanbieters, die von dem jeweiligen Benutzer verwendet werden dürfen. Häufig wird nicht nur eine Geheimnummer dem Benutzer zugewiesen, sondern ein ganzer Satz von ihnen, die für jeweils sicherheitsmäßig abgestufte Funktionen Verwendung finden (z. B. Entsperren des Mobiltelefons bei mehrfach falsch eingegebener Geheimnummer).

Das Durchführen der Authentifizierung, auch als Freischalten bezeichnet, erfolgt dadurch, daß von dem Mobiltelefon eine Funkverbindung mit dem jeweiligen Mobilfunknetz des Netzbetreibers hergestellt wird. Zur Aktivierung erweiterter Dienste und/oder Dienstmerkmale des Netzbetreibers können entweder weitere Zusatznummern zur Eingabe notwendig sein oder es kann aber auch bereits mit der Eingabe der persönlichen Geheimnummer festgelegt sein, welche zusätzlichen Dienste bzw. Dienstmerkmale damit freigeschaltet sind. Bei der erstmaligen Aktivierung und ggf. auch bei folgenden wird vom Netzbetreiber die zugeordnete Telefonnummer übermittelt.

Es versteht sich, daß zur erstmaligen Aktivierung der Netzbetreiber die Gerätenummer des Mobiltelefons bekanntgegeben werden muß, wie auch die Netzbetreiber den Benutzer die persönliche Geheimnummer mitzuteilen hat. Das Übermitteln der Gerätenummer kann dabei manuell, oder vorzugsweise automatisch im Rahmen der ersten Anmeldung im Netz des jeweiligen Mobilfunknetzbetreibers geschehen.

Bei einem Wechsel des Mobiltelefons kann dann eine sofortige Freischaltung bzw. Aktivierung des neuen Mobiltelefons durch die bereits mit dem vorhergehenden Mobiltelefon genutzte Identifikationsnummer des Netzanbieters (Geheimnummer) realisiert werden.

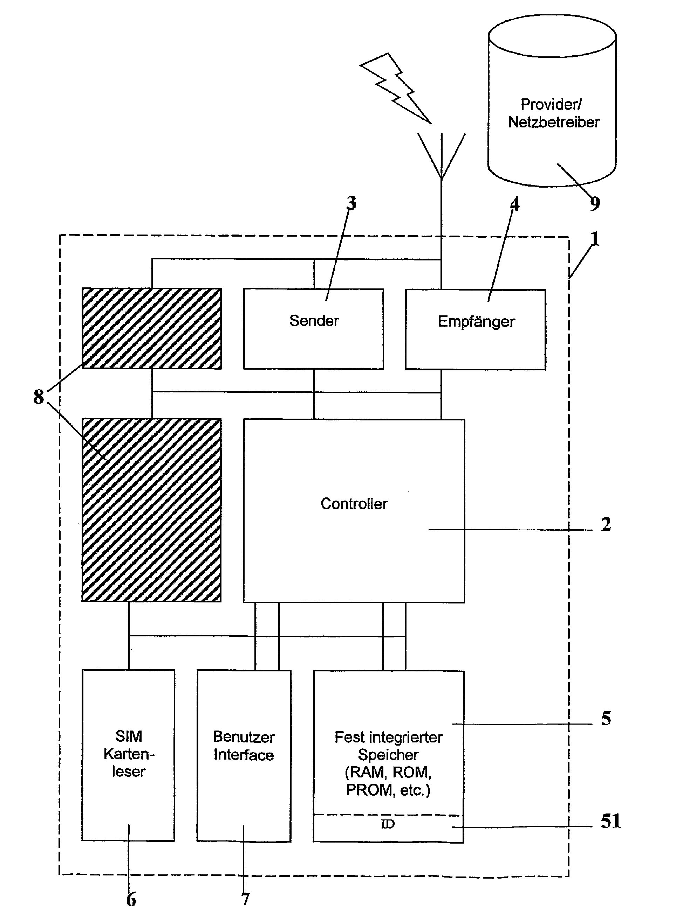

Ein Ausführungsbeispiel für ein erfindungsgemäßes Mobiltelefon ist in der Figur dargestellt.

Ein Mobiltelefon 1 umfaßt in an sich bekannter weise eine zentrale Steuerungseinheit in Form eines Controllers 2, einen Sender 3 sowie einen Empfänger 4 zur Funkkommunikation mit einem Mobilfunknetz 9 eines Betreibers, ein Benutzer-Interface 7 zur Interaktion mit dem Benutzer, in der Regel mindestens umfassend eine Tastatur sowie ein Display, und weitere Baugruppen wie z. B. eine Energieversorgungseinrichtung oder ein Modem, die lediglich schematisiert angedeutet und zusammenfassend und mit dem Bezugszeichen 8 versehen sind.

Erfindungsgemäß ist das Mobiltelefon 1 mit einem fest integrierten Speicher 5 versehen. Der ist mit dem Controller 2 sowie gegebenenfalls mit weiteren Baugruppen des Mobiltelefons 1 verbunden. Der Speicher 5 ist so in dem Mobiltelefon 1 angeordnet, daß er nicht ohne Zerstörung des Mobiltelefons 1 aus diesem entfernt oder reprogrammiert werden kann, außer durch den Hersteller des Mobiltelefons 1 selbst bzw. von ihm speziell dazu autorisierten Fachwerkstätten. Insbesondere ein Benutzer des Mobiltelefons 1 soll dazu nicht in der Lage sein. Der Speicher 5 ist in mehrere Speicherbereiche unterteilt, in einem Speicherbereich 51 ist eine identitätsgebende Nummer einprogrammiert. Diese vorzugsweise weltweit einmalige Kennummer ist ein Teil von Authentifizierungsdaten, die bei einem Aktivierungsvorgang des Mobiltelefons 1 bei dem Mobilfunknetz 9 eines Betreibers zwischen dem Mobiltelefon 1 und dem Mobilfunknetz 9 ausgetauscht werden.

Zweckmäßigerweise ist der Zugang zum Speicher 5 und insbesondere zum Speicher 51 mit der Kennummer durch spezielle, insbesondere kryptographische, Zugriffsverfahren vor unbefugten Manipulationen, insbesondere Reprogrammieren geschützt.

Außerdem weist das Mobiltelefon 1 einen SIM-Kartenleser 6 auf. Derartige SIM-Kartenleser sind an sich bekannt und brauchen daher nicht näher beschrieben zu werden. Sie sind erfindungsgemäß für das Mobiltelefon 1 nicht erforderlich, sondern können optional vorgesehen sein, um als eine Speichererweiterung zu dienen. Das Versehen des Mobiltelefons 1 mit einem zusätzlichen SIM-Kartenleser hat auch den Vorteil, daß ein Benutzer, der bereits über eine SIM-Karte verfügt, das erfindungsgemäße Mobiltelefon 1 jedenfalls auch mit einer SIM-Karte betreiben kann. Der Benutzer ist dann gegebenenfalls unter zwei Telefonnummern über möglicherweise zwei verschiedene Netzbetreiber erreichbar. Dies ist insbesondere für eine Übergangszeit eines Wechsels des Mobilfunknetzbetreibers von Vorteil.

## Patentansprüche

1. Mobiltelefon mit einem Speicher (5) für zugeordnete Identifikations- und Authentfizierungsdaten, der fest integriert und in mehrere Speicherbereiche (51) partitioniert ist, in die jeweils ein Satz der zwingend erforderlichen Identifikations-/Authentifizierungsdaten programmierbar ist, und mit einer Abfrageeinheit (2), die mit dem Speicher (5) derart verbunden ist, um benötigte Sätze der Identifikations- und Authentifizierungsdaten zur Anmeldung in einem zugehörigen Mobilfunknetz (9) auszulesen, wobei in dem Speicher (5) zwingend eine einmalig zum Gerät gehörende Geräte-ID gespeichert ist, **dadurch gekennzeichnet, daß** als Speichererweiterung für den integrierten Speicher (5) ein Aufnahmeschacht (6) für SIM-Karten vorgesehen ist, und daß die Abfrageeinheit (2) mit einer in dem Aufnahmeschacht (6) eingesetzten SIM-Karte derart verbunden ist, um Identifikations- und Authentifizierungsdaten zur Anmeldung auszulosen, und die Abfrageeinrichtung. (2) ferner dazu ausgebildet ist, die Geräte-ID als einen zwingenden Teil der Authentifizierungsdaten und als weiteren Teil vom Netzbetreiber vergebene Kennummern aus dem Speicher (5) auszulesen um eine Schlüsselnummer aus der Gerätenummer sowie eine der Kennummern mittels eines Kodierverfahrens zu generieren und in das Mobilfunknetz zu übertragen und damit einen Anmeldevorgang bei dem zugehörigen Mobilfunknetz (9) durchzuführen.

2. Mobiltelefon nach Anspruch 1, **dadurch gekennzeichnet, daß** der Speicher mit weiteren Authentifizierungsdaten programmierbar ist.

3. Mobiltelefon nach Anspuch 1 oder 2, **dadurch gekennzeichnet, daß** der fest integrierte Speicher erweiterbar ausgeführt ist.

4. Mobiltelefon nach einem der Ansprüche 1 bis 3, **dadurch gekennzeichnet, daß** der Speicher zum Speichern mehrerer alternativ verwendbarer Netzfrequenzen eingerichtet ist.

5. Mobiltelefon nach einem der Ansprüche 1 bis 4, **dadurch gekennzeichnet, daß** der Speicher bezüglich der Speicherung der Netzfrequenzen programmierbar ist.

6. Mobiltelefon nach einem der Ansprüche 1 bis 5, **dadurch gekennzeichnet, daß** der Speicher bezüglich der Freigabe der Netzfrequenz programmierbar ist.

7. Mobiltelefon nach einem der Ansprüche 4 bis 6, **dadurch gekennzeichnet, daß** eine oder mehrere der zugeordneten Rufnummern in Verbindung mit mehr als einer Netzfrequenz verwendbar sind.

8. Mobiltelefon nach einem der Ansprüche 1 bis 7, **dadurch gekennzeichnet, daß** das Mobiltelefon mit einer Navigationseinrichtung versehen ist, die eine mit dem fest integrierten Speicher verbundene Ausleseeinrichtung für die Authentifizierungsdaten aufweist.

9. Verfahren zum Anmelden eines Mobiltelefons an einem Mobilfunknetz, **gekennzeichnet durch** Einprogrammieren einer vom Hersteller vergebenen Gerätenummer sowie mehrerer *Sätze von* Authentifizierungsdaten *einschließlich* von dem Netzbetreiber zugewiesener Kennummern in den fest integrierten Speicher des Mobiltelefons, Generieren einer Schlüsselnummer aus der Gerätenummer sowie einer der Kennummern mittels eines Kodierverfahrens, Eingeben einer Geheimnummer in das Mobiltelefon, Übertragen dieser Nummern in das Mobilfunknetz und Durchführen eines Authentifizierungsverfahrens mit der Schlüsselnummer und der Geheimnummer.

## Claims

1. Mobile telephone with a memory (5) for assigned identification and authentication data which is firmly integrated and divided in many memory areas (51) can be programmed with one set of mandatory identification and authentication data as well as a scanning unit (2) which is linked with the memory (5) in such a way that is able to read the required sets of identification and authentication data required for the login in a respective mobile network (9). A mandatory unique ID-number of the unit is stored in the memory (5) which is **characterised in** such a way that as a memory expansion for the integrated memory (5) a receiver shaft (6) for SIM-cards is provided for. The scanning unit (2) is combined in such a way with receiver shaft (6) that it is able to read the identification and authentication data for the login. The scanning unit (2) is furthermore able to read - and to generate a key number of the unit ID-number as well as an ID-number created through a coding procedure and to transfer this number in the mobile network - the unit ID-number as being a mandatory part of the authentication data and furthermore part of the ID-number given by the service provider from the memory (5) thereby effecting the login process with the respective mobile network (9).

2. Mobile telephone as per Claim 1 **characterised in** such a way that the memory can be programmed with further authentication data.

3. Mobile telephone as per Claim 1 or 2 **characterised in** such a way that an expansion of the firmly integrated memory is provided for

4. Mobile telephone as per Claim 1 to 3 **characterised in** such a way that the memory is able to store various alternatively applicable net frequencies.

5. Mobile telephone as per Claim 1 to 4 **characterised in** such a way that the memory can be programmed with regard to the storage of net frequencies.

6. Mobile telephone as per Claim 1 to 5 **characterised in** such a way that the memory can be programmed with regard to the activation of the net frequency.

7. Mobile telephone as per Claim 4 to 6 **characterised in** such a way that one or more of the assigned telephone numbers can be used in combination with more than one net frequency.

8. Mobile telephone as per Claim 1 to 7 **characterised in** such a way that the mobile telephone is equipped with a navigation system which shows a scanning unit combined with the firmly integrated memory for the authentication data.

9. Procedure for the login process of a mobile telephone in the mobile network, **characterised by** the programming of the unit ID-number assigned by the manufacturer as well as several sets of authentication data including the ID-numbers assigned by the service provider in the firmly integrated memory of the mobile telephone, generate a key number of the unit ID-number as well as an ID-number created through a coding procedure, entering a secret number in the mobile telephone, transferring this number in the mobile network and executing the authentication process with the key number and the secret number.

## Revendications

1. Le téléphone mobile avec le dispositif de mémoire pour la plus commode soustraction des données d'identification et de l'autorisation qui est bien integré et s'utilise dans le domaine des ensembles de mémoire. En chaque cas, l'ensemble des données d'identification et de l'autorisation est programmé avec la demande, qui est lié avec l'ensemble de mémoire pour que la demande nécessaire puisse être présentée par le message sur le téléphone mobile, et, avec l'ensemble de mémoire on garde un important dispositif, lié au ID, à l'aide duquel on marque l'élargissement de l'ensemble de mémoire, il y a aussi une sortie pour la SIM-carte. La demande est lié au dispositif pour l'introduction de la SIM-carte, pour qu'on puisse mettre les données d'identification et de l'autorisation dans le message. Le dispositif pour l'introduction de la demande sera développé par la suite. Le dispositif-ID est une partie importante des données d'identification, de même que de l'utilisateur de réseau, aussi il est important pour l'établissement du numéro de l'ensemble de mémoire et du numéro de code et pour sontransmission au réseau de liaison cellulaire, en but de transmettre le message par le liaison cellulaire.

2. Le téléphone mobile selon la demande 1, par laquelle on reconnaît que l'ensemble de mémoire programme plus de données d'identification.

3. Le téléphone mobile selon la demande 1 ou 2, par laquelle on reconnaît que l'ensemble de mémoire integré est largement utilisé.

4. Le téléphone mobile selon une des demandes de 1 à 3, par laquelle on reconnaît que l'ensemble de mémoire est utilisé avec la mémoire alternative, utilisé pour les fréquences du réseau.

5. Le téléphone mobile selon une des demandes de 1 à 4, par laquelle on reconnaît que l'ensemble de mémoire est programmé relativement aux accumulations des fréquences du réseau.

6. Le téléphone mobile selon une des demandes de 1 à 5, par laquelle on reconnaît que l'ensemble de mémoire est programmé relativement au déblocage des fréquences du réseau.

7. Le téléphone mobile selon une des demandes de 4 à 6, par laquelle on reconnaît qu'un ou plusieurs numéros identifiés sont utilisés en combinaison avec plus qu'une fréquence du réseau.

8. Le téléphone mobile selon une des demandes de 1 à 7, par laquelle on reconnaît que le téléphone mobile est muni du dispositif de navigation, qui, à l'aide de l'ensemble de mémoire et du dispositif de classification découvre les données d'autorisation.

9. La technologie de la présentation du message du téléphone mobile à l'aide de liaison cellulaire est présentée par le numéro programmé par le producteur, aussi par la grande demande des données d'autorisation, y inclut l'établissement du numéro de l'utilisateur de réseau dans l'ensemble de mémoire du téléphone mobile, aussi que la génération du numéro de code du numéro standard et l'établissement du numéro au moyen de la méthode codée, l'introduction du numéro secret dans le téléphone mobile, la transmission de ce numéro dans le réseau mobile et la réalisation du procès d'identification par le numéro de code et le numéro secret.
